# EUROPÄISCHE PATENTSCHRIFT

(11) **EP 0 800 558 B1**
(45) Veröffentlichungstag und Bekanntmachung des Hinweises auf die Patenterteilung: **30.12.1998**
(21) Anmeldenummer: 96938033.6
(22) Anmeldetag: 30.10.1996
(51) Int. Cl.: C09D 5/00, C09D 7/12, G02B 5/20

(54) **BESCHICHTUNGSMITTEL ZUR HERSTELLUNG VON WÄRMESTRAHLEN REFLEKTIERENDEN ÜBERZÜGEN**
AGENT FOR PRODUCING HEAT-REFLECTING COATINGS
AGENT PERMETTANT DE REALISER DES REVETEMENTS REFLECHISSANT LE RAYONNEMENT THERMIQUE

(30) Priorität: 01.11.1995 DE 19540682
(43) Veröffentlichungstag der Anmeldung: 15.10.1997
(73) Patentinhaber: Herberts Gesellschaft mit beschränkter Haftung, 42285 Wuppertal (DE)
(72) Erfinder: KRAUTHÄUSER, Helmuth, D-50829 Köln (DE); GRUNER, Christian, D-50354 Hürth (DE); HUTHMACHER, Gerd, D-50968 Köln (DE)
(74) Vertreter: Türk, Gille, Hrabal
(86) Internationale Anmeldenummer: EP9604703
(87) Internationale Veröffentlichungsnummer: WO9716493

(56) Entgegenhaltungen:
- EP-A- 0 340 313
- WO-A-92/08152
- GB-A- 2 066 825
- GB-A- 2 177 103
- DATABASE WPI Week 9242 Derwent Publications Ltd., London, GB; AN 343528 XP002026368 "PAINT MATERIAL AUTOMOBILE BODY" , 2.September 1992 in der Anmeldung erwähnt & JP 04 246 878 A

## Beschreibung

Die Erfindung betrifft ein Beschichtungsmittel zur Herstellung von Wärmestrahlen reflektierenden Überzügen, enthaltend Bindemittel, Pigmente und Lösemittel und/oder Wasser, das die Aufheizung von damit beschichteten Materialien und Innenräumen durch Sonneneinstrahlung verringert.

Es besteht die Tendenz, Glas und andere transparente Materialien zunehmend an Außenflächen von Gebäuden anzubringen, so daß insbesondere die dunklen Flächen von Innenräumen durch die direkte Sonneneinstrahlung stark erhitzt werden und hohe Raumtemperaturen bewirken. Eine Aufheizung durch Sonneneinstrahlung kann insbesondere auch in Innenräumen von Transportmitteln wie Straßenbahnen, Flugzeugen usw. durch die dunkle Farbgebung auftreten. Bei Anwendung von Kunststoffen für die Fassadenelemente oder Fensterprofile, insbesondere in dunklen Farben, kann die Wärmeentwicklung zu Schäden wir Rissen, Glanzverlust und Farbausbleichung führen.

Um eine Aufheizung, insbesodere bei dunklem Farbauftrag zu verringern bzw. zu vermeiden, wurden Beschichtungssysteme mit Pigmenten entwickelt, die Infrarotstrahlen nicht oder wenig absorbieren. Die Wirkung beruht darauf, daß ein Lackfilm, der derartige Pigmente enthält, auf einen helleren Untergrund aufgebracht wird, der Strahlung im infraroten Wellenlängenbereich reflektiert und diese Strahlung von den Pigmenten im Überzug nicht vollständig absobiert und in Wärme umgewandelt wird, so daß nur eine geringe Wärmeaufheizung erfolgt.

JP-A 53 21 159 beschreibt die Verwendung von Schwarzpigmenten, insbesondere Perylen- und Azomethinazoschwarz mit einem IR-Reflexionsgrad von mehr als 60 % in einem Wellenlängenbereich von 900 bis 1500 nm.

JP-A 42 46 478 beschreibt IR-reflektierende Flächen im Zusammenhang mit einem Überzugsmaterial, das unter anderem Pigmente auf Perylenbasis bzw. Azopigmente enthält. Es wird ein Reflexionsgrad von 80 % erreicht.

Für den Einsatz in Beschichtungsmaterialien, die bestimmte genau vorgegebene Farben und ein vorgegebenes Aussehen aufweisen sollen, müssen diese mit anderen Farbpigmenten kombiniert werden. Dies führt an den Grenzflächen der verschiedenen Pigmente zu Absorptionsvorgängen von sichtbaren und infraroten Strahlungsanteilen, wodurch eine verstärkte Aufheizung und unerwünschte Farbeffekte auftreten.

Laut JP-A 52 93 434 wird eine spezielle Kombination von Buntpigmenten mit jeweils einem bestimmten Kennwert für die Reflexion zum Schutz gegen die Wärmeaufheizung durch Sonnenstrahlung verwendet. Nur die Pigmente, die rot, orange und gelb sind, weisen günstige Werte von über 40 % dieses definierten Kennwertes auf, so daß sich bei Kombination der Pigmente zu dunklen Farben nur geringe Reflexionseffekte ergeben. Des weiteren kann auch hier an den Grenzflächen der verschiedenen Pigmente die Möglichkeit von ungewollten Absorptionsvorgängen, insbesondere von infraroten Strahlungsanteilen, entstehen.

Gemäß US-4 272 291 werden als Hitze reflektierende Pigmente Oxide von Titan, Nickel, Antimon und Chrom verwendet, wobei auch Verschnittmittel wie Talcum und Dolomit eingesetzt werden.

Die WO 89/43 51 beschreibt Hitze isolierende Farbzusammensetzungen, welche Pigmentmischungen aus einem oder mehreren Oxiden von Zirkonium, Yttrium und Indium enthalten. Zusätzlich können weitere Oxide wie Titandioxid, Bariumoxid und Siliciumoxid enthalten sein, wobei kristallene Strukturen eingesetzt werden. Sind dunkle Farben erwünscht, müssen der Zusammensetzung zusätzlich entsprechende dunkle Pigmente zugefügt werden.

Die Verwendung der in beiden Veröffentlichungen beschriebenen Metallverbindungen ist aufgrund der gesundheitsschädigenden Wirkung dieser Verbindungen stark eingeschränkt. Des weiteren sind sie zumeist sehr teuer. Durch die Zumischung von entsprechenden Pigmenten zum Erzielen von dunklen Farben besteht die Gefahr von ungewollten Absorptionsvorgängen an den Grenzflächen der Pigmente und somit von ungewollten Nebeneffekten.

Aus der DE-A 40 35 062 ist ein allgemeines Verfahren bekannt, nach dem Innenräume mit einer IR-Strahlung reflektierenden Oberfläche ausgestattet werden. Als IR-Strahlen reflektierende Pigmente werden genannt Titandioxid, Aluminiumplättchenpigmente, Chromoxid und zur Herstellung von Tarnfarben geeignete IR-Strahlung reflektierende Pigmente. Nachteilig ist, daß das Verfahren sowohl ein speziell infrarotreflektierendes Substrat als auch einen darauf applizierten Lackfilm mit speziellen infrarotdurchlässigen Pigmenten beinhaltet. Das genannte Substrat erfordert einen zusätzlichen Prozeßaufwand und bedingt aufgrund der beschriebenen hellen, weißen oder metallischen Oberfläche - insbesondere an Kanten - Deckkraftprobleme bei der nachfolgenden Beschichtung in dunklen Farben.

Aufgabe der Erfindung ist es, ein Beschichtungsmittel für dunkelfarbige Beschichtungen bereitzustellen, das eine Kombination aus verschiedenartigen Pigmenten enthält. Diese sollen den damit beschichteten Objekten wärmestrahlenreflektierende Eigenschaften verleihen, ohne daß die beschriebenen Nachteile auftreten, insbesondere so, daß die Absorption von infraroten Strahlungsanteilen an den Grenzflächen der verschiedenen Pigmente weitgehend vermieden wird.

Es hat sich gezeigt, daß die Aufgabe gelöst werden kann durch ein Beschichtungsmittel der eingangs genannten Art, das dadurch gekennzeichnet ist, daß es folgende filmbildende Bestandteile enthält
a) 1 bis 8 Gew.-% eines oder mehrerer Schwarzpigmente,
b) 0,1 bis 10 Gew.-% eines oder mehrerer Buntpigmente,
c) 0 bis 10 Gew.-% Weißpigment,
d) 3 bis 30 Gew.-% feindisperser Kieselsäure,
e) 0 bis 25 Gew.-% weiterer Pigmente und Füllstoffe,
f) 40 bis 85 Gew.-% Bindemittel und
g) 0 bis 10 Gew.-% Lackadditive
wobei die Summe der filmbildenden Bestandteile 100 Gew.-% ergibt und die als Komponente b) einzusetzenden Buntpigmente bei Einsatz in einem Prüflack der folgenden Zusammensetzung
20 Gew.-Teile festes Bindemittel auf der Basis von Polyurethan-, Polyester-, Polyacrylat- und/oder Alkydharzen,
70 Gew.-Teile Lösemittel, Wasser oder Gemische davon,
x Gew.-Teile zu prüfendes Buntpigment,
wobei x = 10 bei Prüfung anorganischer Buntpigmente und x = 4 bei Prüfung organischer Buntpigmente ist,

und bei Applikation des Prüflacks auf transparenter Kunststofffolie mit einer resultierenden Trockenschichtdicke von 45 µm in dem Wellenlängenbereich von 400 bis 700 nm einen durchschnittlichen Transmissionswert von weniger als 10 % ergeben, in dem Wellenbereich von 700 bis 1250 nm zu einem Anstieg des Transmissionswertes auf einen Wert von mehr als 70% führen und in dem Wellenlängenbereich von 1250 bis 2000 nm einen durchschnittlichen Transmissionswert von mehr als 70 % ergeben und/oder bei Applikation des Prüflacks auf einem weißen Untergrund mit einer resultierenden Trockenschichtdicke von 45 µm bei einer Wellenlänge von 500 nm einen Remissionswert von weniger als 15 % ergeben und in dem Wellenlängenbereich von 1200 bis 2000 nm einen durchschnittlichen Reflektionswert von mehr als 50 % ergeben.

Eine bevorzugte Ausführungsform stellt das vorstehend beschriebene, erfindungsgemäße Beschichtungsmittel dar, das folgende filmbildende Bestandteile enthält:
a) 3 bis 6 Gew.-& Perylenschwarz, Azomethinschwarz und/oder Chromschwarz
b) 0,8 bis 3 Gew.-% Palomar^{®} blue B 4806, Bayferrox^{®} 3920 und/oder Kobaltgrün
c) 0 bis 10 Gew.-% Titandioxid
d) 5 bis 12 Gew.-% feindisperse Kieselsäure
e) 0 bis 15 Gew.-% weitere Pigmente und Füllstoffe
f) 60 bis 80 Gew.-% Polyurethanharzdispersion oder hydroxyfunktionelle Acrylat- oder Polyesterharze in Kombination mit Isocyanathärter
g) 2 bis 6 Gew.-% Lackadditive,
wobei die Summe der filmbildenden Bestandteile 100 Gew.-% ergibt.

Besonders bevorzugt ist eine Ausführungsform des vorstehend beschriebenen, erfindungsgemäßen Beschichtungsmittel, das folgende filmbildende Bestandteile enthält:
a) 4 bis 5 Gew.-% Chromschwarz (beispielsweise Chromatin Black)
b) 1 bis 2 Gew.-% Kobaltgrün (beispielsweise Lichtgrün 5 G)
c) 0 bis 10 Gew.-% Titandioxid
d) 7 bis 8,5 Gew.-% feindisperse Kieselsäure
e) 9 bis 10 Gew.-% weitere Pigmente und/oder Füllstoffe
f) 68 bis 78 Gew.-% Polyurethanharzdispersion, gegebenenfalls OH-funktionalisiert und
g) 3 bis 4 Gew.-% Lackadditive.

Als Schwarzpigmente sind einsetzbar Pigmente von Perylen- und Azomethinazotyp, beispielsweise Perylenschwarz, Azomethinschwarz. Des weiteren können auch geeignete Metallverbindungen eingesetzt werden, die eine Wärmereflexion ermöglichen. Derartige Verbindungen sind z.B. schwarzes Chrom-, Eisen-, Nickel-, Spinel-, Kobaltschwarz. Grundsätzlich sind aber alle Schwarzpigmente geeignet, die Infrarotlicht nicht nennenswert absorbieren. Die verschiedenen im Handel erhältlichen Produkte sind dem Fachmann bekannt, ihre Wirkung im Hinblick auf das genannte Verhalten gegenüber Infrarotlicht ist hinreichend beschrieben (z.B. Druckschrift der Fa. BASF "Paliogen^{®} schwarz L 0084, Juni 1983). Die Schwarzpigmente können einzeln oder im Gemisch miteinander eingesetzt werden. Bevorzugte Schwarzpigmente sind Perylenschwarz, Azomethinschwarz oder Chromschwarz (z.B. Chromatin Black).

Erfindungsgemäß werden bestimmte geeignete Buntpigmente verwendet. Die Eignung der Buntpigmente ist abhängig vom Verlauf ihrer Transmissionskurve bzw. Remissionskurve.

Für die Eignungsprüfung der Buntpigmente werden Prüflacke mit 20 Gewichtsteilen des zu testenden Pigments, bezogen auf 100 Gewichtsteile festes Bindemittel, in einer üblichen Prüflackrezeptur dispergiert, mit 45 µm Trockenschichtdicke auf weißem Untergrund für Remissionsmessungen bzw. transparenter Kunststoffolie für Transmissionsmessungen aufgebracht und vermessen. Bei anorganischen Pigmenten wird analog verfahren, lediglich werden 50 Gewichtsteile Pigmente, bezogen auf 100 Gewichtsteile festes Bindemittel, angesetzt.

In diesem System müssen die Buntpigmente derart beschaffen sein, daß sie mindestens eine der folgenden beiden Bedingungen erfüllen.

Zur Prüfung der ersten Bedingung wird die Transmissionskurve in einem Spektralbereich von 400 bis 2000 nm ermittelt.

Für die erfindungsgemäß geeigneten Buntpigmente muß die Transmissionskurve angenähert durch ein Kastenprofil derart gestaltet sein, daß zwischen 700 und 1250 nm die Transmissionskurve von kleiner oder gleich 10 % auf größer oder gleich 70 % steil ansteigt.

Im weiteren Verlauf soll die Transmissionskurve bis zu einer Wellenlänge von 2000 nm einen Durchschnittswert von größer oder gleich 70 % beibehalten.

Zur Prüfung der zweiten Bedingung wird die Remissionskurve ermittelt. Unter Verwendung des oben beschriebenen Prüflacks und Einhaltung der beschriebenen Schichtdicke soll die Remissionskurve auf weißem Untergrund bei einer Wellenlänge von 500 nm einen Wert von weniger als 15 % aufweisen und im weiteren Verlauf im Wellenlängenbereich von 1200 bis 2000 nm durchschnittlich einen Wert von über 50 % aufweisen.

Als erfindungsgemäße Buntpigmente eignen sich z.B. Palomar^{®} blue B4806 oder Bayferrox^{®} 3920 oder Kobaltgrün (z.B. Lichtgrün 5G).

Als Weißpigment eignet sich Titandioxid. Ein Gehalt an diesem Pigment ist für die erfindungsgemäße Zusammensetzung nicht wesentlich.

Zusätzlich zu den erfindungsgemäß verwendeten Schwarzpigmenten und den Buntpigmenten ist in der erfindungsgemäßen Beschichtungszusammensetzung als weiterer Bestandteil amorphe hochporöse Kieselsäure enthalten. Solche Stoffe werden durch Flammhydrolyse oder Fällung erzeugt und weisen spezielle Oberflächen von 100 bis 400 m² pro Gramm (BET-Oberfläche) auf. Sie sind z.B. in der Degussa Schriftenreihe Nr. 6, S. 2 beschrieben. Ein Beispiel für einen geeigneten Stoff sind Aerosil^{®} TT600 (Fa. Degussa). Dieser Bestandteil gewährleistet offensichtlich zwischen den verschiedenen Pigmenten ausreichende Abstände, um Absorptionen durch Mehrfachreflexion zu verhindern. Außerdem treten aufgrund der feindispersen, amorphen Struktur Brechungsvorgänge an den IR-Strahlen auf, die insgesamt eine Reflexion derselben bewirken. Es sind 3 bis 30 Gew.-% bezogen auf die filmbildenden Bestandteile an Kieselsäure notwendig.

In der erfindungsgemäßen Beschichtungszusammensetzung können ggf. weitere Pigmente bzw. Füllstoffe wie z.B. Kaolin und Talcum eingesetzt werden. Der Zusatz dieser weiteren Pigmente ist möglich, ohne daß eine Absorption von infraroten Strahlungsanteilen und damit eine nachteilige Einwirkung auf die Reflexionswirkung der erfindungsgemäß eingesetzten Pigmente erfolgt.

Die erfindungsgemäße Beschichtungszusammensetzung kann in der Lackindustrie übliche Bindemittel enthalten. Derartige Bindemittel können z.B. sein Alkydharze, Polyurethanharze, Polyesterharze, Polyacrylatharze sowie Melaminharze. Die Herstellung dieser Bindemittelkomponenten erfolgt nach dem üblichen, dem Fachmann geläufigen Verfahren. Besonders gut geeignete Bindemittel für die erfindungsgemäße Beschichtungszusammensetzung sind isocyanathärtende hydroxyfunktionelle Acrylate oder Polyester. Letztere sind vorteilhaft, wenn weiche, sich beim Berühren angenehm anzufühlende Beschichtungen erzeugt werden sollen.

Die erfindungsgemäß verwendbaren Bindemittel können ggf. mit üblichen Vernetzern und Additiven eingesetzt werden. Derartige Additive können beispielsweise sein Lichtschutzmittel, Stabilisatoren, Netzmittel und Wachse. Letztere werden z.B. verwendet als Mattierungsmittel zur Einstellung des Lackes auf bestimmte Glanzgrade des Lackfilmes.

Die erfindungsgemäße Beschichtungszusammensetzung kann Wasser und/oder Lösemittel zur Einstellung auf die gewünschte Applikaltionsviskosität enthalten. Als Lösemittel sind verwendbar Glykole, Alkohole, Ester, Kohlenwasserstoffe.

Die Verarbeitung des erfindungsgemäßen Beschichtungssystems kann mittels der bekannten Techniken erfolgen, wie beispielsweise Zerstäubung durch Druckluft unter Anwendung einer Lackspritzpistole, Hochrotationsglocken in Verbindung mit elektrostatischen Sprühverfahren, Gießen und Walzen. Die Aushärtung der aus den erfindungsgemäßen Überzugsmitteln herge-stellten Überzüge kann in einem weiten Temperaturbereich von z.B. 20°C bis 130°C erfolgen, bevorzugt zwischen 60°C und 90°C.

Die erfindungsgemäße Beschichtungszusammensetzung ist für Überzüge auf Gegenständen und Flächen geeignet, bei denen eine stärkere Aufheizung vermieden werden soll. Dies können Gegenstände und Flächen aus Metall, Holz, Kunststoff, Kunststoff-Folien und anderen mit dunklem Farbauftrag zu versehenden Materialien sein. Das erfindungsgemäße Beschichtungssystem kann auch im Mehrschichtverfahren eingesetzt werden. So kann vor der Beschichtung mit dem erfindungsgemäßen System eine Grundierung oder ein Primer aufgebracht werden und nach der Beschichtung mit dem erfindungsgemäßen System ein Klarlack aufgetragen werden. Beispiele für Beschichtungsobjekte sind Ausstattungsteile im Innenraum von Gebäuden, Flugzeugen, Bahnen oder anderen Fortbewegungsmitteln, Fassadenelemente von Gebäuden, Kameragehäuse und weiteres. Die Farbe des Lackieruntergrundes, auf den die erfindungsgemäße Lackzusammensetzung zu applizieren ist, ist für die Erfindung nicht wesentlich. Bei pigmentierten Kunststoffen oder anderen pigmenthaltigen Untergründen können diejenigen Einfärbungen verwendet werden, die ohne Berücksichtigung des gewünschten IR-Strahlungsverhaltens üblich und gewünscht sind. Somit können auch mit Farbruß pigmentierte Kunststoffuntergründe in schwarzer oder grauer Farbe eingesetzt werden.

Das erfindungsgemäße Beschichtungssystem ermöglicht die Beschichtung von Objekten oder Flächen in dunklen Farbtönen mit verminderter Aufheizung der beschichteten Objekte und Flächen. Im Gegensatz zu anderen Beschichtungssystemen, die IR-Strahlen bzw. Wärmestrahlen reflektierende Oberflächen ergeben, ermöglicht die erfindungsgemäße Beschichtungszusammensetzung mit den speziellen Bestandteilen auch die Beschichtung von mit Ruß dunkel-grau bis schwarz gefärbten Substraten sowie beliebige Nachstellungen von Farbvorlagen in dunklen Farbtönen mit nur einer Lackschicht.

Die folgenden Beispiele dienen der Erläuterung der Erfindung.

### Beispiel 1

Herstellung eines erfindungsgemäßen Lackes:

In 47 g Bindemittellösung Bayhydrol VPLS 2058 werden 1,3 g Chromofine black A1103 (Fa. Dainichiseika), 0,1 g Buntpigment Bayferrox® 3920FF (Handelsprodukt der Fa. Bayer AG) 30 Minuten lang in einer Perlmühle bei 50°C dispergiert. Es werden 6 g Aerosil® T600 (Handelsprodukt der Fa. Degussa) unter hochtourigem Rühren mittels eines Labordissolvers eingearbeitet und die Mischung mit 15 g obiger Bindemittel-Lösung, 8 g Methoxypropanol-Lösungsmittel und 7 g Wasser komplettiert. Vor Verarbeitung werden als Härter 15 g Bayhydur VPLS 2980 (Handelsprodukt der Fa. Bayer) eingerührt.

Beschichtung eines weiß pigmentierten Substrats mit dem erfindungsgemäßen Lack:

Mit einer Fließbecherpistole wird der Lack mit 30 µm Trockenschichtdicke auf eine weiß pigmentierte ABS-Kunststoff-Platte aufgebracht und anschließend 30 Minuten lang bei 80°C getrocknet. Es ergibt sich eine gleichmäßige schwarze Farbe.

### Beispiel 2

Beschichtung eines grau pigmentierten Substrates mit dem erfindungsgemäßen Lack:

Gemäß Beispiel 1 wird eine Kunstoffplatte beschichtet, die mit Rußpigment und Weißpigment mittelgrau eingefärbt ist. Es entsteht eine gleichmäßige schwarze Farbe.

Prüfung des IR-Bestrahlungsverhaltens der erfindungsgemäßen Beschichtung:

Die gemäß Beispiel 1 beschichtete Platte wird im Abstand von 40 cm 300 Sekunden lang mit einer Infrarotlampe bestrahlt und anschließend sofort die Temperatur ermittelt. Sie beträgt 58°C.

Prüfung des IR-Bestrahlungsverhaltens der erfindungsgemäßen Beschichtung:

Die gemäß Beispiel 2 beschichtete Platte wird in gleicher Weise auf Temperaturerhöhung geprüft. Die ermittelte Endtemperatur beträgt 60°C.

### Vergleichsbeispiel 1

Herstellung eines Vergleichslackes und Beschichtung eines Substrates:

In 42 g Bindemittellösung Bayhydrol VPLW 2058 werden 1,4 g Spezialpigment Paliogenschwarz L0084 (Fa. BASF) und 6 g Quarzpigment Sillitin N (Fa. Quarzwerke) 30 Minuten lang in einer Perlmühle bei 50°C dispergiert. Es wird die Mischung mit 15 g obiger Bindemittel-Lösung, 8 g Methoxypropanol und 7 g Wasser komplettiert. Vor Verarbeitung wird als Härter 15 g Bayhydur VPLS 2980 eingerührt.

Der Vergleichslack wird gemäß Beispiel 1 aufgetragen.

Es ergibt sich eine nahezu schwarze, jedoch stark buntstichige grünliche Farbe.

### Vergleichsbeispiel 2

### Herstellung eines Vergleichslackes und Beschichtung eines Substrates

Analog zu Vergleichsbeispiel 1 wird ein Lack hergestellt, der anstelle von Paliogenschwarz 1,4 g Chromofineblack A 1103 enthält.

Durch Beschichten einer Kunststoffplatte gemäß Beispiel 1 mit diesem Lack erhält man eine Beschichtung, die fast schwarz jedoch deutlich violettstichig erscheint.

### Vergleichsbeispiel 3

Herstellung eines Vergleichslackes und Beschichtung eines Substrates:

In 46 g Bindemittellösung Bayhydrol VPLS 2058 werden 1,1 g Spezialpigment Paliogenschwarz L 0084 30 Minuten lang in einer Perlmühle bei 50°C dispergiert. Es wird die Mischung mit 15 g obiger Bindemittel-Lösung, 8g Methoxypropanol-Lösungsmittel und 7 g Wasser komplettiert. Vor Verarbeitung werden als Härter 15 g Bayhydur VPLS 2058 eingerührt. Es wird unter Rühren soviel Farbpaste bestehend aus 2 Gewichtsteilen Rußpigment in 100 Gewichtsteile obiger Bindemittellösung zugefügt, bis die Mischung derjenigen aus Beispiel 1 bezüglich der Unbuntheit und tiefdunkelgrauen Färbung entspricht.

Nach Beschichtung gemäß Beispiel 1 mit diesem Lack ergibt sich eine gleichmäßige schwarze Farbe.

Prüfung des IR-Bestrahlungsverhaltens:

Die gemäß Vergleichsbeispiel 1 beschichtete Platte wird im Abstand von 40 cm 300 Sekunden lang mit einer Infrarotlampe bestrahlt, und anschließend wird sofort die Temperatur ermittelt. Sie beträgt 76°C.

## Patentansprüche

1. Beschichtungsmittel zur Herstellung Wärmestrahlen reflektierender Überzüge, enthaltend Bindemittel, Pigmente und Lösemittel und/oder Wasser, **dadurch gekennzeichnet,** daß es folgende filmbildende Bestandteile enthält
a) 1 bis 8 Gew.-% eines oder mehrerer Schwarzpigmente,
b) 0,1 bis 10 Gew.-% eines oder mehrerer Buntpigmente,
c) 0 bis 10 Gew.-% Weißpigment,
d) 3 bis 30 Gew.-% feindisperser Kieselsäure,
e) 0 bis 25 Gew.-% weiterer Pigmente und Füllstoffe,
f) 40 bis 85 Gew.-% Bindemittel und
g) 0 bis 10 Gew.-% Lackadditive,
wobei die Summe der filmbildenden Bestandteile 100 Gew.-% ergibt und die als Komponente b) einzusetzenden Buntpigmente bei Einsatz in einem Prüflack der folgenden Zusammensetzung
20 Gew.-Teile festes Bindemittel auf der Basis von Polyurethan-, Polyester-, Polyacrylat- und/oder Alkydharzen,
70 Gew.-Teile Lösemittel, Wasser oder Gemische davon,
x Gew.-Teile zu prüfendes Buntpigment,
wobei x = 10 bei Prüfung anorganischer Buntpigmente und x = 4 bei Prüfung organischer Buntpigmente ist,
und bei Applikation des Prüflacks auf transparenter Kunststofffolie mit einer resultierenden Trockenschichtdicke von 45 µm in dem Wellenlängenbereich von 400 bis 700 nm einen durchschnittlichen Transmissionswert von weniger als 10 % ergeben, in dem Wellenbereich von 700 bis 1250 nm zu einem Anstieg des Transmissionswertes auf einen Wert von mehr als 70% führen und in dem Wellenlängenbereich von 1250 bis 2000 nm einen durchschnittlichen Transmissionswert von mehr als 70 % ergeben und/oder bei Applikation des Prüflacks auf einem weißen Untergrund mit einer resultierenden Trockenschichtdicke von 45 µm bei einer Wellenlänge von 500 nm einen Remissionswert von weniger als 15 % ergeben und in dem Wellenlängenbereich von 1200 bis 2000 nm einen durchschnittlichen Reflektionswert von mehr als 50 % ergeben.

2. Beschichtungsmittel nach Anspruch 1, dadurch gekennzeichnet, daß es folgende filmbildende Bestandteile enthält:
a) 3 bis 6 Gew.-% Perylenschwarz, Azomethinschwarz und/oder Chromschwarz
b) 0,8 bis 3 Gew.-% Palomar® blue B 4806, Bayferrox® 3920 und/oder Kobaltgrün
c) 0 bis 10 Gew.-% Titandioxid
d) 5 bis 12 Gew.-% feindisperse Kieselsäure
e) 0 bis 15 Gew.-% weitere Pigmente und Füllstoffe
f) 60 bis 80 Gew.-% Polyurethanharzdispersion oder hydroxyfunktionelle Acrylat- oder Polyesterharze in Kombination mit Isocyanathärter
g) 2 bis 6 Gew.-% Lackadditive,
wobei die Summe der filmbildenden Bestandteile 100 Gew.-% ergibt.

3. Beschichtungsmittel nach Anspruch 1 oder 2, dadurch gekennzeichnet, daß die Kieselsäure eine spezifische Oberfläche (BET-Oberfläche) von 100 bis 400 m²/g aufweist.

4. Beschichtungsmittel nach Anspruch 1, 2 oder 3, dadurch gekennzeichnet, daß es als Bindemittel hydroxyfunktionelle Acrylat- oder Polyesterharze in Kombination mit einem Isocyanathärter enthält.

5. Verwendung des Beschichtungsmittels nach Anspruch 1 bis 4 zur Beschichtung von Metall, Holz oder Kunststoff.

6. Verwendung des Beschichtungsmittels nach Anspruch 1 bis 5 zur Herstellung von Wärmestrahlen reflektierenden Überzügen in Innenräumen von Verkehrsmitteln.

## Claims

1. A coating medium for the production of radiant heat-reflecting coatings, containing binder vehicles, pigments, and solvents and/or water, characterised in that it contains the following film-forming constituents
a) 1 to 8 % by weight of one or more black pigments,
b) 0.1 to 10 % by weight of one or more coloured pigments,
c) 0 to 10 % by weight of white pigment,
d) 3 to 30 % by weight of finely dispersed hydrated silica,
e) 0 to 25 % by weight of further pigments and extenders,
f) 40 to 85 % by weight of binder vehicles, and
g) 0 to 10 % by weight of lacquer additives,
wherein the sum of the film-forming constituents is 100 % by weight, and the coloured pigments to be used as component b), when used in a test lacquer of the following composition
20 parts by weight of solid binder vehicles based on polyurethane, polyester, polyacrylate and/or alkyd resins,
70 parts by weight of solvents, water or mixtures thereof,
x parts by weight of the coloured pigment to be tested,
wherein x = 10 when testing inorganic coloured pigments and x = 4 when testing organic coloured pigments,
and on application of the test lacquer to transparent plastics films to give a resulting dry coat thickness of 45 µm, result in an average transmission value of less than 10 % within the wavelength range from 400 to 700 nm, result in an increase in the transmission value to a value greater than 70 % within the wavelength range from 700 to 1250 nm, and result in an average transmission value of greater than 70 % within the wavelength range from 1250 to 2000 nm, and/or on application of the test lacquer to a white substrate to give a resulting dry coat thickness of 45 µm result in a reflectance value of less than 15 % at a wavelength of 500 nm, and result in an average reflection value of greater than 50 % within the wavelength range from 1200 to 2000 nm.

2. A coating medium according to claim 1, characterised in that it contains the following film-forming constituents:
a) 3 to 6 % by weight of perylene black, azomethine black and/or chromium black
b) 0.8 to 3 % by weight Palomar® blue B 4806, Bayferrox® 3920 and/or cobalt green
c) 0 to 10 % by weight titanium dioxide
d) 5 to 12 % by weight of finely dispersed hydrated silica
e) 0 to 15 % by weight of further pigments and extenders
f) 60 to 80 % by weight of a polyurethane resin dispersion or of hydroxy-functional acrylate or polyester resins in combination with isocyanate hardeners
g) 2 to 6 % by weight of lacquer additives,
wherein the sum of the film-forming constituents is 100 % by weight.

3. A coating medium according to claims 1 or 2, characterised in that the hydrated silica has a specific surface (BET specific surface) of 100 to 400 m²/g.

4. A coating medium according to claims 1, 2 or 3, characterised in that it contains, as binder vehicles, hydroxy-functional acrylate or polyester resins in combination with an isocyanate hardener.

5. The use of the coating medium according to claims 1 to 4 for the coating of metal, wood or plastics.

6. The use of the coating medium according to claims 1 to 5 for the production of radiant heat-reflecting coatings in the interior spaces of means of transport.

## Revendications

1. Produit de revêtement pour l'application de revêtement réfléchissant le rayonnement thermique, qui contient des liants, des pigments et des solvants et/ou de l'eau, caractérisé en ce qu'il contient les constituants filmogènes suivants :
a) 1 à 8 % en poids d'un ou plusieurs pigments noirs,
b) 0,1 à 10 % en poids d'un ou plusieurs pigments colorés,
c) 0 à 10 % en poids d'un pigment blanc,
d) 3 à 30 % en poids de silice en fine dispersion,
e) 0 à 25 % en poids d'autres pigments et matières de charge,
f) 40 à 85 % en poids de liants et
g) 0 à 10 % en poids d'additifs pour peintures et vernis,
la somme des constituants filmogènes représentant 100 % en poids et les pigments colorés à utiliser en tant que composant b), utilisés dans une peinture d'essai à la composition suivante :
20 parties en poids d'un liant solide à base de résines de polyuréthannes, de polyesters, de polyacrylates et/ou alkydes,
70 parties en poids de solvants, d'eau ou leurs mélanges,
x parties en poids du pigment coloré soumis à l'essai,
x étant égal à 10 dans le cas de pigments colorés minéraux et à 4 dans le cas de pigments colorés organiques,
la peinture d'essai étant appliquée sur une feuille de résine synthétique transparente à une épaisseur de couche sèche de 45 µm,
donnent un coefficient de transmission moyen inférieur à 10 % dans l'intervalle des longueurs d'onde de 400 à 700 nm, passant à plus de 70 % dans l'intervalle des longueurs d'onde de 700 à 1250 nm et à plus de 70 % dans l'intervalle des longueurs d'onde de 1250 à 2000 nm,
et/ou, la peinture d'essai étant appliquée sur un fond blanc à une épaisseur de couche sèche de 45 µm,
ils donnent un coefficient de rémission inférieur à 15 % à la longueur d'onde de 500 nm et un coefficient de réflexion moyen de plus de 50 % dans l'intervalle des longueurs d'onde de 1200 à 2000 nm.

2. Produit de revêtement selon revendication 1, caractérisé en ce qu'il contient les constituants filmogènes suivants :
a) 3 à 6 % en poids de noir de pérylène, de noir d'azométhine et/ou de noir de chrome,
b) 0,8 à 3 % en poids de Bleu Paloma® B 4806, de Bayferrox® 3920 et/ou de vert de cobalt,
c) 0 à 10 % en poids de dioxyde de titane,
d) 5 à 12 % en poids de silice en fine dispersion,
e) 0 à 15 % en poids d'autres pigments et matières de charge,
f) 60 à 80 % en poids d'une dispersion de résine de polyuréthanne ou d'une combinaison de résine d'acrylate ou de polyester à fonctions hydroxy avec un durcisseur du type isocyanate,
g) 2 à 5 % en poids d'additifs pour peintures et vernis,
la somme des constituants filmogènes représentant 100 % en poids.

3. Produit de revêtement selon revendication 1 ou 2, caractérisé en ce que la silice a une surface spécifique (surface BET) de 100 à 400 m²/g.

4. Produit de revêtement selon revendication 1, 2 ou 3, caractérisé en ce qu'il contient en tant que liant une résine d'acrylate ou de polyester à fonctions hydroxy en combinaison avec un durcisseur du type isocyanate.

5. Utilisation du produit de revêtement selon revendications 1 à 4 pour le revêtement de métal, de bois ou de résine synthétique.

6. Utilisation du produit de revêtement selon revendications 1 à 5, pour l'application de revêtements réfléchissant le rayonnement thermique dans les parties intérieures des moyens de transports.
